# EUROPEAN PATENT SPECIFICATION

(11) **EP 3 841 307 B1**
(45) Date of publication and mention of the grant of the patent: **28.01.2026**
(21) Application number: 19749854.6
(22) Date of filing: 17.07.2019
(51) Int. Cl.: F16B 12/04, B27F 5/02, F16B 12/24

(54) **IMPROVED WOOD JOINT FOR FURNITURE**
VERBESSERTE HOLZVERBINDUNG FÜR MÖBEL
JOINT EN BOIS AMÉLIORÉ POUR MEUBLES

(30) Priority: 20.08.2018 NL 2021485
(43) Date of publication of application: 30.06.2021
(73) Proprietor: FixChip Holding B.V., 6135 KD Sittard (NL)
(72) Inventor: SMEETS, Antoon Josef Maria, 6361 EP Nuth (NL)
(74) Representative: van Breda, Jacobus
(86) International application number: PCT/NL2019/050454
(87) International publication number: WO 2020/040635

(56) References cited:
- EP-A2- 0 898 086
- DE-A1- 102017 106 922
- DE-A1- 4 320 164
- DE-U1- 29 503 533
- FR-A1- 2 574 876
- MASTERWOOD DEUTSCHLAND GMBH: "Nesting mit Lamello Clamex Schrankverbindern mit Montage", YOUTUBE, 11 April 2017 (2017-04-11), pages 1 - 1, XP054979318, Retrieved from the Internet <URL:https://www.youtube.com/watch?v=zhb7agi0TzA> [retrieved on 20190423]
- --: "Lamello catalogue", 22 December 2018 (2018-12-22), XP055581612, Retrieved from the Internet <URL:https://www.lamello.com/fileadmin/user_upload/Media/Katalog/Lamello_Catalogue_EN.pdf> [retrieved on 20190416]

## Description

### FIELD OF THE INVENTION

The invention is in the field of a wood joint connector to be applied in furniture and the like, to a method of producing a piece of furniture comprising at least two plates, and to a piece of furniture comprising said wood joint connector. The method involves a computer controlled nesting machine or the like.

### BACKGROUND OF THE INVENTION

The present invention can make use of a Computer numerical controlled (CNC) machine, wherein operation of the machine and machine tools is automated. A computer executes a sequence of machine control commands which is provided to the computer by an algorithm or the like. Also a change of machine tools, such as from a cutting to a drilling part, can be fully automated. As such a series of parts can be formed, starting from one or more single elements, such as a plate suited for furniture. The dimensions of a part (in the series of parts) can be defined using computer-aided design (CAD) software. As mentioned above the design can then be translated into manufacturing directives by computer-aided manufacturing (CAM) software. The resulting directives can be transformed into specific commands necessary for a particular machine to produce the component, such as cutting away a section or drilling a slit.

Since forming a part can require use of a number (typically a multitude) of different operational tools, such as drills, saws, and cutters, machines often combine these multiple tools. In other installations, a number of different machines are used with an external controller and human or robotic operators that move the component from machine to machine.

The CNC machine is preferably a nesting machine. Nesting refers to a process of laying out cutting patterns with a primary goal to minimize raw material waste. Examples include manufacturing parts from flat raw material such as sheet metal, a wooden plate, a wood composite material, medium density fibre plate, plywood, synthetic material, and combinations thereof, such as Trespa^{®}. To minimize waste of raw material produced during cutting, similar to the CNC machines nesting software is used. The software analyses the geometry of parts to be produced and optimizes production of ae required quantity of parts, while minimizing raw material being wasted. The present invention relates primarily to rectangular nesting, though it is equally applicable to geometries having an irregular or odd shape. Nesting software typically takes into account limitations and features of the machining technology in use, such as that no machining can take place where the raw material is clamped into place, as well as material characteristics, such as defects on material that must be discarded.

In production more and more use is made of these CNC nesting machines. As mentioned an entire plate is provided in a gross size and sucked in by means of vacuum. The parts of furniture are then milled out, whereby the parts preferably lie against each other as close to one and another as possible in order to provide maximum efficiency and minimal contamination of the machine.

In prior art furniture and wood construction dowels may be used. However, for drilling a hole the furniture panels need to be much further apart. A recess is then milled having a size of a drilling unit, and subsequently a hole is drilled laterally for this traditional dowel with the drilling unit. Apart from the additional processing, the lower efficiency and the pollution of the machine, an aggregate is also required.

One may only pre-drill the sidewalls of the panels and then screw the panels together. Such is however difficult to automate, if not impossible. Pre-drilling is also done in combination with the above dowel or the below Lamello connection.

In an alternative Lamello has brought the Clamex series (WO 2018/028911 A1 and US 2017/0114812 A2) on the market. However the Clamex requires a space between the (furniture) panels to be formed on a CNC or nesting machine of at least 110 mm. In addition an aggregate or a 5-axis machine is also required for making the Clamex connector, adding complexity to production. The efficiency is therefore low and a lot of waste is generated. From an economic point of view the Clamex series cost price of € 0.55-€ 0.70 is also not attractive.

In an alternative Lamello provides the Cabineo connector (DE 10 2016 202 450 A1) which can also be used in the nesting, 3 however. After assembling panels it is however in sight and is difficult to assemble, hence no industrial solution.

Incidentally reference can be made to DE 295 03 533 U1, DE 43 20 164 A1, a video of Masterwood Deutschland GmbH (Nesting mit lamella Clamex Schrankverbindern mit Montage", 2017-4-11), which relates to the above Clamex, and EP 0 898 086 A2, which latter document shows an almost complete sphere and a trapezium shaped part, of which the seems to be introduced from a side of a furniture part through a cylindrical opening. DE 295 03 533 U1 typically shows a three-piece connector, having two circular segments 8 and one rectangular element 5, which elements are not in the same plane and are not formed as one piece (fig. 1, claim 1). A similar argument holds for DE 43 20 164 A1 (fig. 2) showing two elements, with two or more curved sections in one element, and two or more recesses for receiving the curved sections in another element. Patent document FR 2574876 A1 discloses a wood joint connector according to the preamble of claim 1.

The present invention therefore relates to an improved wood joint connector, a method of producing furniture, and a piece of furniture obtainable by said method, which overcome one or more of the above disadvantages, without jeopardizing functionality and advantages.

### SUMMARY OF THE INVENTION

The present invention relates in a first aspect to a wood joint connector 10 for furniture in accordance with claim 1. The present wood joint connector is referred to as Fixchip^{®}. The Fixchip connector or joint is a new connector that is unique, as by using e.g. mechanical (CNC) machining the necessary recesses and slits can be produced with a vertical spindle. No further aggregates or drilling units are required. The FixChip provides a firm construction allowing no further movement of construction parts relative to one and another, contrary to e.g. the above prior art joints. It can be used both vertically and horizontally, and laterally no more than 38 mm space is required thereby reducing waste. After assembly the present joint is not visible. The Fixchip can ensure a definitive breakthrough of the use of a nesting machine, as the production time drastically decreases (about 20%), the yield goes up, less waste is formed and contamination of the machine is minimized. It is also more pure because as all operations can be performed with one and the same spindle; such has a further advantage that a more accurate reference point can be used, for determining a position of the spindle relative thereto; in fact the reference point may be regarded as an "absolute" origin point. This makes the Fixchip also interesting for traditional machines. The Fixchip may be in various forms, such as Fixchip that can be glued, and a Fixchip that can be firmly attached by impact (such as by a hammer) and therefore does not need an adhesive.

Constructively, tests have to be done with regard to material. The Fixchip glue variant may have a larger glue surface than the traditional dowel. In addition no remainders of glue are found, especially in the corners at the transition from the circular segment to the rectangular element. A preferred material is polymeric, such as plastic. It is noted that adhesion of a traditional wood adhesive with the plastic could have a negative influence on adhesive strength. By providing grooves the adhesive connection is found to be sufficiently strong. For the Fixchip impact variant hooks may be provided which only allow release of the connector by force. A big advantage of the Fixchip impact variant is that no pressing time and screws are required when assembling the furniture. This offers a perspective for do-it-yourself furniture.

In a second aspect the present invention relates to a piece of furniture in accordance with claim 4. This piece of furniture comprises at least two plates 20, a first plate 20a having at least two slits 21 provided in a top side thereof, each slit having a depth substantially equal to a width w of the rectangular parallelepiped 12 of the wood joint connector 10, a length equal to the length lᵣ of the wood joint connector 10, and a width substantially equal to the thickness t of the wood joint connector, a second plate 20b, having at least two recesses 22 provided at a side thereof, each recess having a depth substantially equal to a width d of the circular segment 11 of the wood joint connector 10, a length equal to the length l_{c} of the wood joint connector 10, and a width substantially equal to the thickness t of the wood joint connector, and at least two wood joint connectors 10, wherein the first plate 20a and second plate 20 are joined under an angle of 90 degrees by the wood joint connectors 10. It is noted that if a length of a plate is relatively small, such as smaller than 20 cm, only one slit and recess can be provided. Examples of furniture are cupboards, kitchen furniture, etc.

In a third aspect the present invention relates to a method of producing the present piece of furniture, comprising providing a computer controlled CNC nesting machine, providing an algorithm for cutting and drilling, providing a plate, removing at least 35 mm of plate material in between plate sections, providing at least two recesses at at least one side of a plate section with a radius of 35 mm, a height t, and a width d, and providing at least two slits at a top side of a plate section.

Thereby the present invention provides a solution to one or more of the above-mentioned problems.

Advantages of the present invention are detailed throughout the description.

### DETAILED DESCRIPTION OF THE INVENTION

The present invention relates in a first aspect to a wood joint connector according to claim 1.

In an exemplary embodiment the present wood joint connector may comprise at least one recess 17 for distributing an adhesive.

In an exemplary embodiment the present wood joint connector is at least partly provided with regular grooves, such as grooves of 0.2-2 mm, preferably 0.3-1.5 mm, such as 0.4-0.8 mm.

In an exemplary embodiment of the present wood joint connector hooks are provided at a surface thereof.

In the present wood joint connector according to the invention, two small and opposite sides 18 of the rectangular parallelepiped and the circular side 19 of the circular segment are rounded.

In an exemplary embodiment of the present wood joint connector w is 10-15 mm, preferably 12-13 mm,

In an exemplary embodiment of the present wood joint connector d is 10-15 mm, preferably 12-13 mm,

In an exemplary embodiment of the present wood joint connector lᵣ is 30-50 mm, preferably 38-42 mm.

In an exemplary embodiment of the present wood joint connector the joint is made from a metal, such as stainless steel, aluminium, brass, copper, from wood, from a polymer, and combinations thereof.

In an exemplary embodiment of the present furniture each plate 20a comprises one slit 21 per 10-40 cm, and wherein each plate 20b comprises one recess 22 per 10-40 cm. As mentioned above if a plate 20a or 20b is relatively small, such as smaller than 20 cm, e.g. 10 cm, only one recess and slit are provided respectively.

The invention is further detailed by the accompanying figures and examples, which are exemplary and explanatory of nature and are not limiting the scope of the invention. To the person skilled in the art it may be clear that many variants, being obvious or not, may be conceivable falling within the scope of protection, defined by the present claims.

### SUMMARY OF THE FIGURES

Figures 1a, 1b, 1d, 1e, 1f, 1g show exemplary embodiments of the present FixChip.
Figures 1c & 1h show connectors not according to the invention.
Figure 2a-c show panels and a piece of furniture.
Figure 3 shows planned operations on a nesting machine.

### DETAILED DESCRIPTION OF THE FIGURES

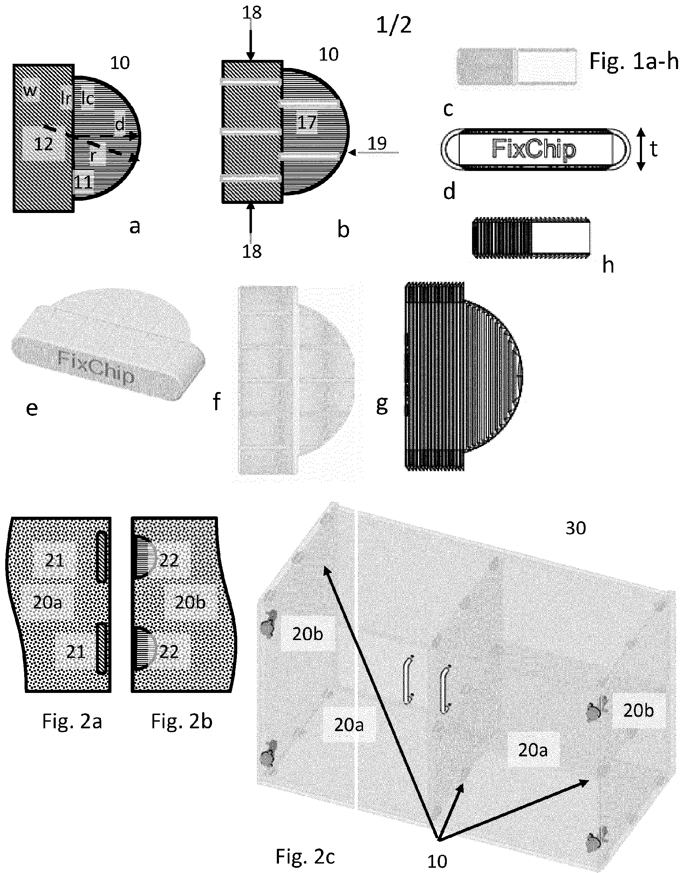

Figure 1a shows the present wood joint connector 10 with circular segment 11 and rectangular element 12 schematically. The circular segment has a radius r, a length l_{c}, and a width d, whereas the rectangular parallelepiped has a width w and a length lᵣ, lᵣ being larger then l_{c}. The thickness is about 8.5 mm.

Fig. 1b shows recesses 17 provided in both segments, for supporting distribution of an adhesive to be applied. Further a side 19 of the circular segment is indicated.

Fig. 1c shows a side view of a connector not according to the invention. Fig. 1d shows a front view and fig. 1e shows a perspective view of a FixChip according to the invention. Fig. 1f shows a top view with 5 recesses in the rectangular parallelepiped and also 5 grooves (albeit some having a small length) in the circular segment.

Fig. 1g shows an example of the impact variant, provided with hooks or ridges. The left side can be used as an impact side. Fig. 1h shows a side view of a connector not according to the invention.

Fig. 2a shows a first panel 20a provided with slits 21 in a top side thereof, and fig. 2b a second panel 20b with recesses 20 provided in a (left) side thereof. Fig. 2c shows a piece of furniture 30 having a number of panels 20b and 20a, and joints 10 providing a firm construction.

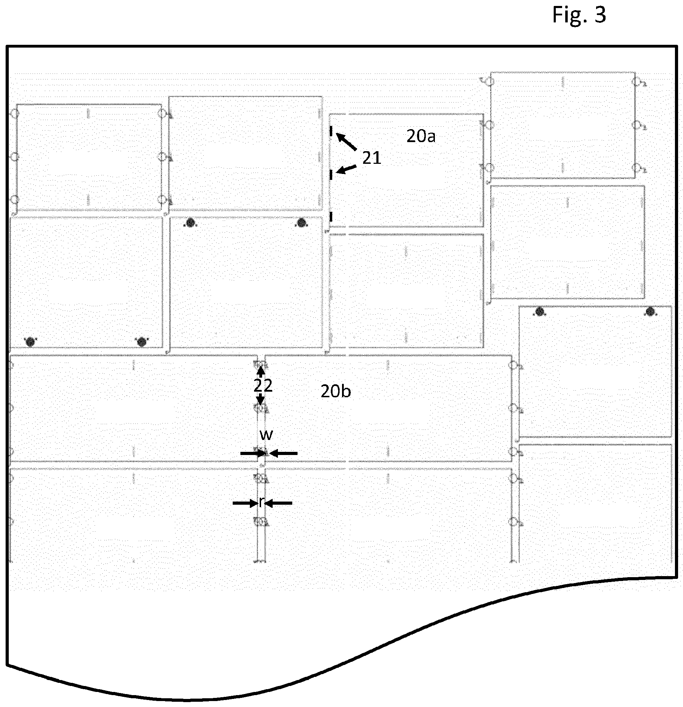

Fig. 3 shows planned operations on a nesting machine and a schematically result thereof. Various panels 20a and 20b are formed. In between panels material is removed by a cutter with a radius of 35 mm. Slightly more material (36-40 mm, typically 38 mm) is removed, allowing free passage of the cutter. The cutter is used to make recesses 22 which resemble the circular segments 11 closely, having a width w and a radius r; the cutter only enters panel 20b partly. Also recesses 21 are formed on a top side of panels 20a.

## Claims

1. Wood joint connector (10) for furniture comprising a cylindrical segment on a rectangular parallelepiped (12), said cylindrical segment comprising in a cross-sectional plane a circular segment (11) with a radius r, a width d, and length l_{c}, wherein the radius r of the circular segment is from 20-40 mm, preferably from 30-35 mm, and
the rectangular parallelepiped (12) has a width w and length lᵣ,
wherein the length l_{c} of the circular segment (11) is smaller than the length lᵣ, of the rectangular parallelepiped (12),
with a thickness t of the wood joint connector (10) is from 4-10 mm, preferably 5-8 mm, such as 6-6.5 mm,
wherein the wood joint connector is a single piece joint, and
the cylindrical segment and the rectangular parallelepiped are in the same plane, and
**characterized in that** two small and opposite sides (18) of the rectangular segment and the circular side (19) of the cylindrical segment are rounded.

2. Wood joint connector according to claim 1, comprising at least one recess (17) for distributing an adhesive.

3. Wood joint connector according to any of 1-2, wherein the joint is made from a metal, such as stainless steel, aluminium, brass, copper, from wood, from a polymer, and combinations thereof.

4. Piece of furniture (30) provided with a wood joint connector (10) according to any one of claims 1 - 3, said piece of furniture (30) comprising at least two plates (20), a first plate (20a) having at least one slit and preferably at least two slits (21) provided in a top side thereof, each slit having a depth substantially equal to a width w of the rectangular parallelepiped (12) of the wood joint connector (10), a length equal to the length lᵣ of the wood joint connector (10), and a width substantially equal to the thickness t of the wood joint connector (10),
a second plate (20b), having at least one recess and preferably at least two recesses (22) provided at a side thereof, each recess having a depth substantially equal to a width d of the circular segment (11) of the wood joint connector (10), a length equal to the length l_{c} of the wood joint connector (10), and a width substantially equal to the thickness t of the wood joint connector, and
at least two wood joint connectors (10),
wherein the first plate (20a) and second plate (20) are joined under an angle of 90 degrees by the wood joint connectors (10).

5. Piece of furniture according to claim 4, wherein each plate (20a) comprises one slit (21) per 10-40 cm, and wherein each plate (20b) comprises one recess (22) per 10-40 cm.

6. Method of producing a piece of furniture according to any of claims 4-5, comprising
providing a computer controlled (CNC) nesting machine,
providing an algorithm for cutting and drilling,
providing a plate,
removing at least 35 mm of plate material in between plate sections,
providing at least one recess and preferably at least two recesses at at least one side of a plate section with a radius of 35 mm, a height t, and a width d, and
providing at least one slit and preferably at least two slits at a top side of a plate section.

## Patentansprüche

1. Holzverbinder (10) für Möbel, umfassend ein zylindrisches Segment auf einem rechteckigen Parallelepiped (12), wobei das genannte zylindrische Segment in einer Querschnittsebene ein Kreissegment (11) mit einem Radius r, einer Breite d und einer Länge l_{c} umfasst, wobei der Radius r des Kreissegments von 20 bis 40 mm, vorzugsweise von 30 bis 35 mm, beträgt und das rechteckige Parallelepiped (12) eine Breite w und eine Länge lᵣ aufweist,
wobei die Länge l_{c} des Kreissegmentes (11) kleiner als die Länge lᵣ des rechteckigen Parallelepipeds (12) ist,
mit einer Dicke t des Holzververbinders (10) von 4 bis 10 mm, vorzugsweise 5 bis 8 mm, wie 6 bis 6,5 mm,
wobei der Holzverbinder ein einstückiges Verbindungsstück ist und das zylindrische Segment und das rechteckige Parallelepiped in derselben Ebene liegen, und
**dadurch gekennzeichnet, dass** zwei kleine und gegenüberliegende Seiten (18) des rechteckigen Segments und die kreisförmige Seite (19) des zylindrischen Segments abgerundet sind.

2. Holzverbinder nach Anspruch 1, mit mindestens einer Aussparung (17) zum Verteilen eines Klebstoffs.

3. Holzverbinder nach einem der Punkte 1 - 2, wobei der Verbinder aus einem Metall, wie Edelstahl, Aluminium, Messing, Kupfer, aus Holz, aus einem Polymer und Kombinationen davon hergestellt ist.

4. Möbelstück (30) mit einem Holzverbinder (10) nach einem der Ansprüche 1 bis 3, wobei das genannte Möbelstück (30) mindestens zwei Platten (20) umfasst, wobei eine erste Platte (20a) mindestens einen Schlitz und vorzugsweise mindestens zwei Schlitze (21) aufweist, die in einer Oberseite derselben vorgesehen sind, wobei jeder Schlitz eine Tiefe aufweist, die im Wesentlichen gleich einer Breite w des rechteckigen Parallelepipeds (12) des Holzverbinders (10) ist, eine Länge, die gleich der Länge lᵣ des Holzverbinders (10) ist, und eine Breite, die im Wesentlichen gleich der Dicke t des Holzverbinders (10) ist,
eine zweite Platte (20b) mit mindestens einer Aussparung und vorzugsweise mindestens zwei Aussparungen (22), die an einer Seite davon vorgesehen sind, wobei jede Aussparung eine Tiefe aufweist, die im Wesentlichen gleich einer Breite d des Kreissegments (11) des Holzverbinders (10) ist, eine Länge, die gleich der Länge l_{c} des Holzverbinders (10) ist, und eine Breite, die im Wesentlichen gleich der Dicke t des Holzverbinders ist, und mindestens zwei Holzverbinder (10),
wobei die erste Platte (20a) und die zweite Platte (20) unter einem Winkel von 90 Grad durch die Holzverbinder (10) verbunden sind.

5. Möbelstück nach Anspruch 4, wobei jede Platte (20a) einen Schlitz (21) pro 10 bis 40 cm aufweist, und wobei jede Platte (20b) eine Aussparung (22) pro 10 bis 40 cm aufweist.

6. Verfahren zum Herstellen eines Möbelstücks nach einem der Ansprüche 4 bis 5, umfassend
Bereitstellen einer computergesteuerten (CNC) Nesting-Maschine,
Bereitstellen eines Algorithmus zum Schneiden und Bohren, Bereitstellen einer Platte,
Entfernen von mindestens 35 mm Plattenmaterial zwischen Plattenabschnitten,
Bereitstellen von mindestens einer Aussparung und vorzugsweise von mindestens zwei Aussparungen an mindestens einer Seite eines Plattenabschnitts mit einem Radius von 35 mm, einer Höhe t und einer Breite d, und
Bereitstellen von mindestens einem Schlitz und vorzugsweise von mindestens zwei Schlitzen an einer Oberseite eines Plattenabschnitts.

## Revendications

1. Connecteur d'assemblage en bois (10) pour meubles comprenant un segment cylindrique sur un parallélépipède rectangle (12), ledit segment cylindrique comprenant, dans un plan de coupe transversale, un segment circulaire (11) avec un rayon r, une largeur d et une longueur l_{c}, le rayon r du segment circulaire étant compris entre 20 et 40 mm, de préférence entre 30 et 35 mm, et le parallélépipède rectangle (12) ayant une largeur w et une longueur lᵣ, la longueur l_{c} du segment circulaire (11) étant inférieure à la longueur lᵣ du parallélépipède rectangle (12), l'épaisseur t du connecteur d'assemblage en bois (10) étant comprise entre 4 et 10 mm, de préférence entre 5 et 8 mm, par exemple entre 6 et 6,5 mm, le connecteur d'assemblage en bois étant une pièce unique, et le segment cylindrique et le parallélépipède rectangle étant dans le même plan, et **caractérisé en ce que** deux petits côtés opposés (18) du segment rectangulaire et le côté circulaire (19) du segment cylindrique sont arrondis.

2. Connecteur d'assemblage en bois selon la revendication 1, comprenant au moins une cavité (17) pour la distribution d'un adhésif.

3. Connecteur d'assemblage en bois selon l'une quelconque des revendications 1 - 2, dans lequel l'assemblage est réalisé en métal, tel que l'acier inoxydable, l'aluminium, le laiton, le cuivre, en bois, en polymère, ou en combinaisons de ceux-ci.

4. Pièce de mobilier (30) munie d'un connecteur d'assemblage en bois (10) selon l'une quelconque des revendications 1 - 3, ladite pièce de mobilier (30) comprenant au moins deux plaques (20), une première plaque (20a) comportant au moins une fente et de préférence au moins deux fentes (21) prévues sur sa face supérieure, chaque fente ayant une profondeur sensiblement égale à une largeur w du parallélépipède rectangle (12) du connecteur d'assemblage en bois (10), une longueur égale à la longueur lᵣ du connecteur d'assemblage en bois (10), et une largeur sensiblement égale à l'épaisseur t du connecteur d'assemblage en bois (10), une seconde plaque (20b) comportant au moins une cavité et de préférence au moins deux cavités (22) prévues sur l'un de ses côtés, chaque cavité ayant une profondeur sensiblement égale à une largeur d du segment circulaire (11) du connecteur d'assemblage en bois (10), une longueur égale à la longueur l_{c} du connecteur d'assemblage en bois (10), et une largeur sensiblement égale à l'épaisseur t du connecteur d'assemblage en bois (10), et au moins deux connecteurs d'assemblage en bois (10), dans laquelle la première plaque (20a) et la seconde plaque (20b) sont assemblées sous un angle de 90 degrés par les connecteurs d'assemblage en bois (10).

5. Pièce de mobilier selon la revendication 4, dans laquelle chaque plaque (20a) comprend une fente (21) par 10 à 40 cm, et dans laquelle chaque plaque (20b) comprend une cavité (22) par 10 à 40 cm.

6. Procédé de fabrication d'une pièce de mobilier selon l'une quelconque des revendications 4 - 5, comprenant :
- la mise à disposition d'une machine de nesting à commande numérique (CNC),
- la mise à disposition d'un algorithme de découpe et de perçage,
- la mise à disposition d'une plaque,
- l'enlèvement d'au moins 35 mm de matériau de plaque entre des sections de plaque,
- la réalisation d'au moins une cavité et de préférence d'au moins deux cavités sur au moins un côté d'une section de plaque, ladite cavité ayant un rayon de 35 mm, une hauteur t et une largeur d, et
- la réalisation d'au moins une fente et de préférence d'au moins deux fentes sur une face supérieure d'une section de plaque.
